# EUROPEAN PATENT SPECIFICATION

(11) **EP 0 532 765 B1**
(45) Date of publication and mention of the grant of the patent: **17.06.1998**
(21) Application number: 92907995.2
(22) Date of filing: 06.04.1992
(51) Int. Cl.: C09J 175/00, C08G 18/18, C08G 18/20, C08G 18/10

(54) **MOISTURE-CURABLE HOT-MELT ADHESIVE COMPOSITION**
FEUCHTIGKEITSVERNETZENDE SCHMELZKLEBSTOFFZUSAMMENSETZUNG
COMPOSITION ADHESIVE THERMOFUSIBLE DURCISSABLE A L'HUMIDITE

(30) Priority: 08.04.1991 JP 75161/91
(43) Date of publication of application: 24.03.1993
(73) Proprietor: SEKISUI KAGAKU KOGYO KABUSHIKI KAISHA, Osaka-shi Osaka 530 (JP)
(72) Inventor: KUDOU, Kazuho, Kouga-gun Siga-ken 528 (JP)
(74) Representative: TER MEER STEINMEISTER & PARTNER GbR
(86) International application number: JP9200428
(87) International publication number: WO9217556

(56) References cited:
- EP-A- 0 054 219
- DE-A- 4 008 359
- FR-A- 2 123 372
- JP-A- 3 135 970
- JP-A- 3 179 017
- JP-A-57 123 214
- JP-A-58 013 618

## Description

### Technical Field

The present invention relates generally to compositions for moisture curing hot melt adhesives using a urethane prepolymer, and more particularly, to compositions for moisture curing hot melt adhesives exhibiting superior thermal stability and initial adhesive strength.

### Background Art

Moisture curing hot melt adhesives composed of a urethane prepolymer having an isocyanate group in its end have been conventionally known. For example, Japanese Patent Laid-Open Gazette No. 189486/1988 and Japanese Patent Laid-Open Gazette No. 284577/1989 disclose moisture curing hot melt adhesives using a urethane prepolymer which are superior in initial adhesive strength.

Furthermore, it has been known that an organic metal compound such as dibutyltin dilaurate or tin octate or a tertiary amine compound such as triethylamine or triethylenediamine is added as a catalyst to this type of moisture curing hot melt adhesives.

The initial heat resistance of the above described moisture curing adhesives composed of the urethane prepolymer depends on the softening point similarly to a case of ordinary hot melt adhesives. Thus, it takes a very long period for the adhesives to exhibit practical heat resistance with progress of polymerization due to moisture curing. Consequently, an adherend must be subjected to aging for two to three days after adhesion. As a result, in the conventional adhesives disclosed in the above described prior art, the adherend must be aged for a long time, so that the productivity of a bonding operation cannot be sufficiently increased. which is uneconomical.

On the other hand, if the above described catalyst composed of organic metal compounds is added, the moisture curing characteristics of the adhesives can be enhanced, thereby to make it possible to shorten a curing time period. However, if the catalyst composed of the organic metal compounds is added, the thermal stability of the adhesives is significantly lowered, so that the adhesives may, in some cases. be gelled in a coating machine.

More specifically, in the conventional moisture curing hot melt adhesives composed of the urethane prepolymer, both the curing speed and the thermal stability cannot be made adequate, so that the improvements have been required.

DE-A-4 008 359 discloses the use of morpholino substituted tertiary amines as catalyst for the reaction between a polyisocyanate compound and a multifunctional active hydrogen-containing compound for preparing urethane polymers such as polyurethane foam or polyurethane resin.

US-A-4 404 352 discloses a method of producing polyurethanes which comprises reacting an at least partially blocked isocyanate compound with an active hydrogen-containing compound in the presence of at least one tin compound and at least one amine compound, which maybe a morpholine-containing amine. The polyurethanes are especially used for coating purposes.

EP-A-0 054 219 discloses a method for preparing optionally foamed polyurethanes wherein morpholine derivatives are used as catalysts.

FR-A-2 123 372 discloses a method for preparing a polyurethane foam wherein 4-(2-dimethylaminoethyl)-morpholine is used as a catalyst.

### Object of the Invention

The present invention has been made so as to satisfy the above described requirements and has for its object to provide compositions for moisture curing hot melt adhesives superior in reactivity with moisture, exhibiting sufficient thermal resistance in a short time after adhesion, and also superior in thermal stability in the use.

### Disclosure of the Invention

As a result of zealously examining moisture curing hot melt adhesives using a urethane prepolymer which satisfy the above described requirements, the inventors of the present application have found that the above described requirements can be satisfied if compounds having a particular structure are used as a catalyst, to reach the present invention.

In accordance with a first aspect of the present invention, there is provided the use of a composition containing a urethane prepolymer having isocyanate group in its end and a compound having a structure represented by the following formula (I): 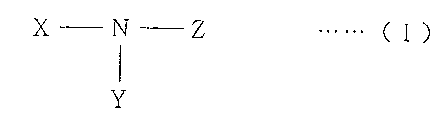 (where X, Y and Z are alkyl groups or groups represented by the following formula (II), and at least one of X, Y and Z is a group represented by the following formula (II): 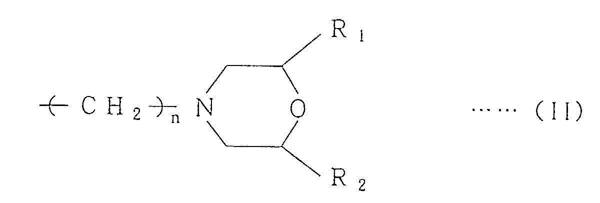 n is an integer from 1 through 10, and R₁ and R₂ are alkyl groups or hydrogen) in an amount of 0.01 to 5 parts by weight per 100 parts by weight of the urethane prepolymer, for preparing a moisture-curable hot melt adhesive.

Furthermore, in accordance with a second aspect of the present invention, there is provided a moisture-curable hot melt adhesive which is characterized by containing a urethane prepolymer having an isocyanate group in its end, a tackifying resin in an amount of 5 to 200 parts by weight per 100 parts by weight of the urethane prepolymer, and a compound having a structure represented by the foregoing formula (I) in an amount of 0.01 to 5 parts by weight per 100 parts by weight of the urethane prepolymer.

In accordance with still another aspect of the present invention, there is provided a moisture-curable hot melt adhesive according to the second aspect of the invention which is characterized by further containing a thermoplastic polymer in an amount of 10 to 100 parts by weight per 100 parts by weight of the urethane prepolymer.

The components of the composition for moisture curing hot melt adhesives according to the present invention will be described in detail.

### Urethane prepolymer

A urethane prepolymer used in the present invention is a urethane prepolymer having an isocyanate group in its end which is obtained by the addition reaction of polyols having a hydroxyl group or groups in its molecular end and polyisocyanates having an isocyanate group or groups in its molecular end.

As the above described polyols, conventionally known polyols generally used for the manufacture of polyurethane can be used. Examples of such polyols include polyester polyols, polyether polyols, polyalkylene polyols, and polycarbonate polyols.

More specifically, examples of the above described polyester polyols include polyester polyols obtained by the reaction of terephthalic acid, isophthalic acid, 1,5-naphthalic acid, 2,6-naphthalic acid, succinic acid, glutaric acid, adipic acid, picric acid, suberic acid, azelaic acid, sebacic acid, or dicarboxylic acids such as decamethylene dicarboxylic acid or dodecamethylene dicarboxylic acid and diols such as ethylene glycol, propylene glycol, 1,3-propanediol, 1,4-butanediol, neopentyl glycol, 1,5-pentanediol, 1,6-hexanediol, diethylene glycol or cyclohexanediol; and poly-ε caprolactone-polyol obtained by ring-opening polymerization of ε-caprolactam. Examples of the above described polyether polyols include polyethylene glycol, polypropylene glycol, and polytetramethylene glycol. Examples of the above described polyalkylene polyol include polybutadiene polyol, polybutadiene polyol hydride, and polyisoprene polyol hydride. Examples of the above described polycarbonate polyols include polyhexamethylene carbonate polyol, and polycyclohexane dimethylene carbonate polyol. The above described types of polyols may be used alone or in combination.

Furthermore, examples of the above described polyisocyanate include tolylene diisocyanate, diphenylmethane diisocyanate, liquid denatured matter of diphenylmethane diisocyanate, hexamethylene diisocyanate, xylylene diisocyanate, cyclohexane phenylene diisocyanate, and naphthalene-1,5-diisocyanate.

### Compound having structure represented by formula (I)

In the present invention, a compound having a structure represented by the formula (I) is added as a catalyst to the above described urethane prepolymer having isocyanate group or groups in its end. This compound is a tertiary amine catalyst, as apparent from the above described formula (I). The use of the catalyst makes it possible to obtain properties which are not obtained when the conventional catalyst is used. More specifically, both the moisture curing reactivity and the thermal stability are significantly enhanced by using the catalyst.

Examples of the compound having the structure represented by the formula (I) include bis(2-(2,6-dimethyl-4-morpholino) ethyl) - (2-(4-morpholino) ethyl) amine, bis(2-(2,6-dimethyl-4-morpholino) ethyl) - (2-(2,6-diethyl-4-morpholino) ethyl) amine, tris(2-(4-morpholino) ethyl) amine, tris(2-(4-morpholino) propyl) amine, tris(2-(4-morpholino) butyl) amine, tris(2-(2,6-dimethyl-4-morpholino) ethyl) amine, tris(2-(2,6-diethyl-4-morpholino) ethyl) amine, tris(2-(2-methyl-4-morpholino) ethyl) amine or tris(2-(2-ethyl-4-morpholino) ethyl) amine.

The amount of addition of the compound having the structure represented by the formula (I) is in the range of 0.01 to 5 parts by weight and preferably, in the range of 0.1 to 2 parts by weight as the amount converted into the structure represented by the formula (I) per 100 parts by weight of a urethane prepolymer. The effect of accelerating the moisture curing reaction is not sufficiently obtained if the amount of addition is less than 0.01 parts by weight, while the thermal stability is lowered so that the adhesives may, in some cases, be gelled in the use if the amount of addition exceeds 5 parts by weight, which is not preferable.

The range of the amount of addition of the compound having the structure represented by the above described formula (I) varies depending on the type of polyol used for obtaining a urethane prepolymer. More specifically, it is preferable that the amount of addition of the compound having the structure represented by the above described formula (I) is in the range of 0.01 to 2 parts by weight per 100 parts by weight of a urethane prepolymer which is obtained using, for example, polyester polyol, while being in the range of 0,05 to 5 parts by weight per 100 parts by weight of a urethane prepolymer which is obtained using, for example, polyalkylene polyol.

In either case, the amount of addition of the compound having the structure represented by the formula (I) is determined to a suitable range by experiments depending on the type of a urethane prepolymer used.

### Tackifying resin

As described in the foregoing, in accordance with another broad aspect of the present invention, a tackifying resin is contained in addition to the above described urethane prepolymer and compound having the structure represented by the formula (I).

The above described tackifying resin gives superior initial adhesive properties to the moisture curing type hot melt adhesives according to the present invention in cooperation with other adhesive components. Examples of the tackifying resin usable include rosin type resin, terpene type resin, aliphatic petroleum resin, cycloaliphatic petroleum resin or aromatic petroleum resin and preferably, one whose ring and ball softening point is 80 to 150°C.

The types of tackifying resins may be used alone or in combination.

The amount of the above described tackifying resin is in the range of 5 to 200 parts by weight and preferably, in the range of 10 to 100 parts by weight per 100 parts by weight of a urethane prepolymer. The reason for this is that sufficient initial adhesive properties cannot be given to the composition for moisture curing type hot melt adhesives when the amount of the tackifying resin is less than 5 parts by weight, while the adhesives become weak and particularly, are liable to be lacking in adhesive properties under a low temperature when it exceeds 200 parts by weight.

### Thermoplastic polymer

In accordance with still another aspect of the present invention, a thermoplastic polymer is contained in addition to the above described urethane prepolymer, compound having the structure represented by the formula (I), and tackifying resin.

The above described thermoplastic polymer gives superior initial adhesive properties and heat resistance to the composition for moisture curing hot melt adhesives according to the present invention in cooperation with other components.

Preferable examples of the above described thermoplastic polymer include an A-(B-A)n block copolymer (where n is a number in the range of 1 to 50) or an A-B radial block copolymer when A is taken as a polystyrene block and B is taken as a rubber block. The above described A, that is, the polystyrene block contains a block unit containing polystyrene, poly α-methylstyrene and another similar aromatic monomer. In addition, B, that is, the rubber block may be hydrogenated or may not be hydrogenated and contains isoprene, butadiene, another monomer capable of forming a rubbery polymer block, and a polymer manufactured from a repeated unit induced from their mixtures.

Specific examples of such an A-(B-A)n block copolymer or an A-B radial block copolymer include a styrene-butadiene-styrene copolymer (hereinafter abbreviated as SBS), a styrene-isoprene-styrene copolymer (SIS), and a styrene-ethylene-butylene-styrene copolymer (SEBS). In addition, preferable other examples of the above described thermoplastic polymer include a vinyl polymer containing an ethylene-vinyl monomer copolymer whose melt index is approximately 0.1 to 1000 and which contains approximately 10 to 40 % by weight of a vinyl monomer or a vinyl polymer containing 20 to 50 % by weight of a vinyl monomer, 40 to 77 % by weight of ethylene, and 3 to 20 % by weight of carbon monooxide. Examples of this type of vinyl polymer include an ethylene-vinyl acetate copolymer (hereinafter abbreviated as EVA). In addition, the above described vinyl monomer includes an acrylate monomer or a vinyl ester monomer of a carboxylic acid compound. Examples of the above described vinyl polymer containing an acrylate monomer as a vinyl monomer include an ethylene-acrylic ester copolymer, an ethylene-methacrylic acid copolymer or the like.

Still other examples of the thermoplastic polymer used in the present invention include a polyolefin polymer such as atactic polypropylene (hereinafter abbreviated as APP) or an ethylene-α-olefin copolymer.

Meanwhile, the above described various types of thermoplastic polymers may be used alone or in combination.

The amount of the above described thermoplastic polymer is generally in the range of 10 to 100 parts by weight per 100 parts by weight of a urethane prepolymer.

The reason for this is that flexible and sufficient initial adhesive properties (adhesive strength immediately after adhesion which is not dependent on moisture curing) cannot be given to the composition for moisture curing hot melt adhesives according to the present invention when the amount of the thermoplastic polymer is less than 10 parts by weight, while the adhesives cannot be applied unless the adhesives are heated to not less than 140°C, which significantly deteriorates the thermal stability of the adhesives because the melting viscosity of the adhesives is increased if the amount of the thermoplastic polymer exceeds 100 parts by weight.

### Other Additives

Other additives, for example, waxes such as paraffin wax or microcrystalline wax, inorganic and organic fillers, various oils or coloring agents may be suitably added within the range in which an object of the present invention is achieved to the composition for moisture curing hot melt adhesives according to the present invention.

According to the present invention, the compound having the structure represented by the formula (I) is added as a catalyst to the urethane prepolymer having an isocyanate group in its end. Accordingly, both the moisture curing reactivity and the thermal stability in the use are effectively enhanced. Consequently, if the composition for adhesives according to the present invention is used, sufficient heat resistance and adhesive strength are achieved without aging an adherend for a long time.

Accordingly, even if the composition for moisture curing hot melt adhesives according to the present invention is used in the field in which heat resistance is required, adhesion is possible in a short time, thereby to make it possible to significantly increase the productivity of a bonding operation.

### Brief Description of the Drawings

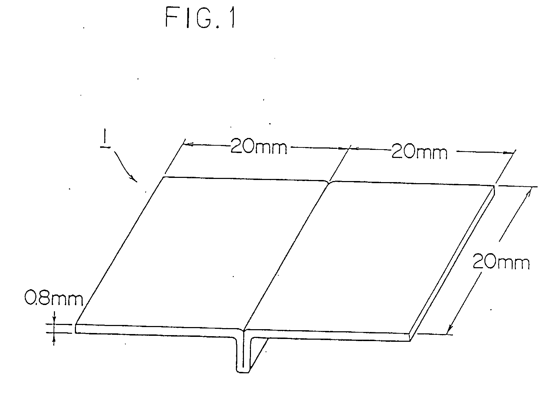

Fig. 1 is a perspective view illustrating a pentight steel plate used in a heat-resistant creep test at 80°C of compositions for moisture curing hot melt adhesives in examples and comparative examples.

### Best Mode for Carrying out the Invention

The present invention will be made clear by explaining non-restrictive examples and comparative examples of the present invention.

### Example 1

200 parts by weight of polyalkylene polyol (POLYTAIL HA (trade name) manufactured by Mitubishi Chemical Industries, Ltd.) and 52 parts by weight of diphenylmethane diisocyanate (MDI)) are mixed with each other at a temperature of 100°C and are reacted with each other in an atmosphere of nitrogen for three hours, to obtain a urethane prepolymer (1). 30 parts by weight of saturated alicyclic hydrocarbon resin (ARKON P-125 (trade name) manufactured by Arakawa Chemical Industries, Ltd.) and a catalyst having a structure represented by the following formula (III) or (IV) are added to 100 parts by weight of the urethane prepolymer (1) obtained and are hot melt mixed with each other at a temperature of 150°C and then, a mixture obtained is vacuum deaerated, thereby to obtain a composition for moisture curing hot melt adhesives.

Meanwhile, the amount of addition of the catalyst represented by the formula (III) or (IV) is changed as shown in the table 1 described hereafter, thereby to obtain four types of compositions for moisture curing hot melt adhesives in examples 1-a, 1-b, 1-c and 1-d.

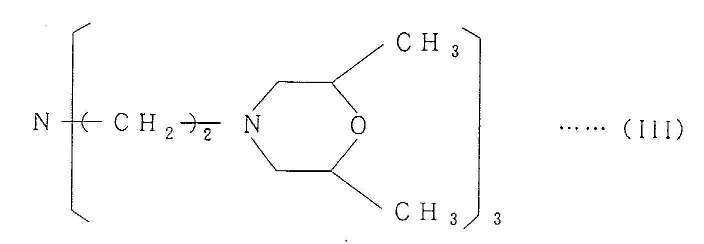

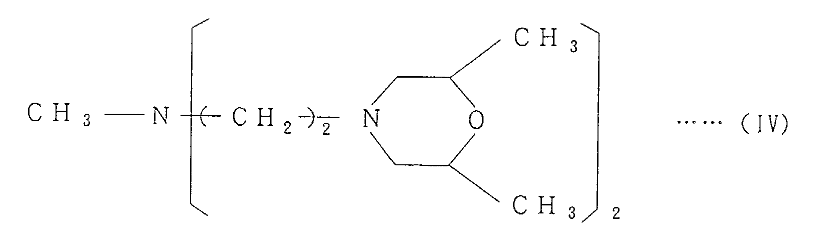

### Comparative Example 1

Four types of compositions for moisture curing type hot melt adhesives in comparative examples 1-a, 1-b, 1-c and 1-d are obtained as shown in the table 1 described hereafter in the same manner as the example 1 except that dibutyl tin dilaurate (DBTDL), stannous octoate (SnOct), triethylenediamine (TEDA), pentamethyl diethylenetriamine (PMDETA) are respectively used as catalysts.

### Example 2

200 parts by weight of polytetramethylene adipate and 30 parts by weight of diphenylmethane diisocyanate (MDI) are mixed with each other at a temperature of 100°C and are reacted with each other in an atmosphere of nitrogen for three hours, to obtain a urethane prepolymer (2). 50 parts by weight of terpene-styrene resin (YS RESIN TO-125 (trade name) manufactured by Yasuhara Chemical Co., Ltd.), 20 parts by weight of an α-olefin copolymer (BEST PLAST 708 (trade name) manufactured by Hüles Co., Ltd.), and 0.4 parts by weight of the catalyst represented by the formula (III) are hot mixed with 100 parts by weight of the urethane prepolymer (2) obtained at a temperature of 150°C and then, a mixture obtained is vacuum deaerated, thereby to obtain a composition for moisture curing hot melt adhesives.

### Comparative Example 2

A composition for moisture curing hot melt adhesives in a comparative example 2 is obtained in exactly the same manner as the example 2 except that the catalyst having the structure represented by the formula (III) is not added.

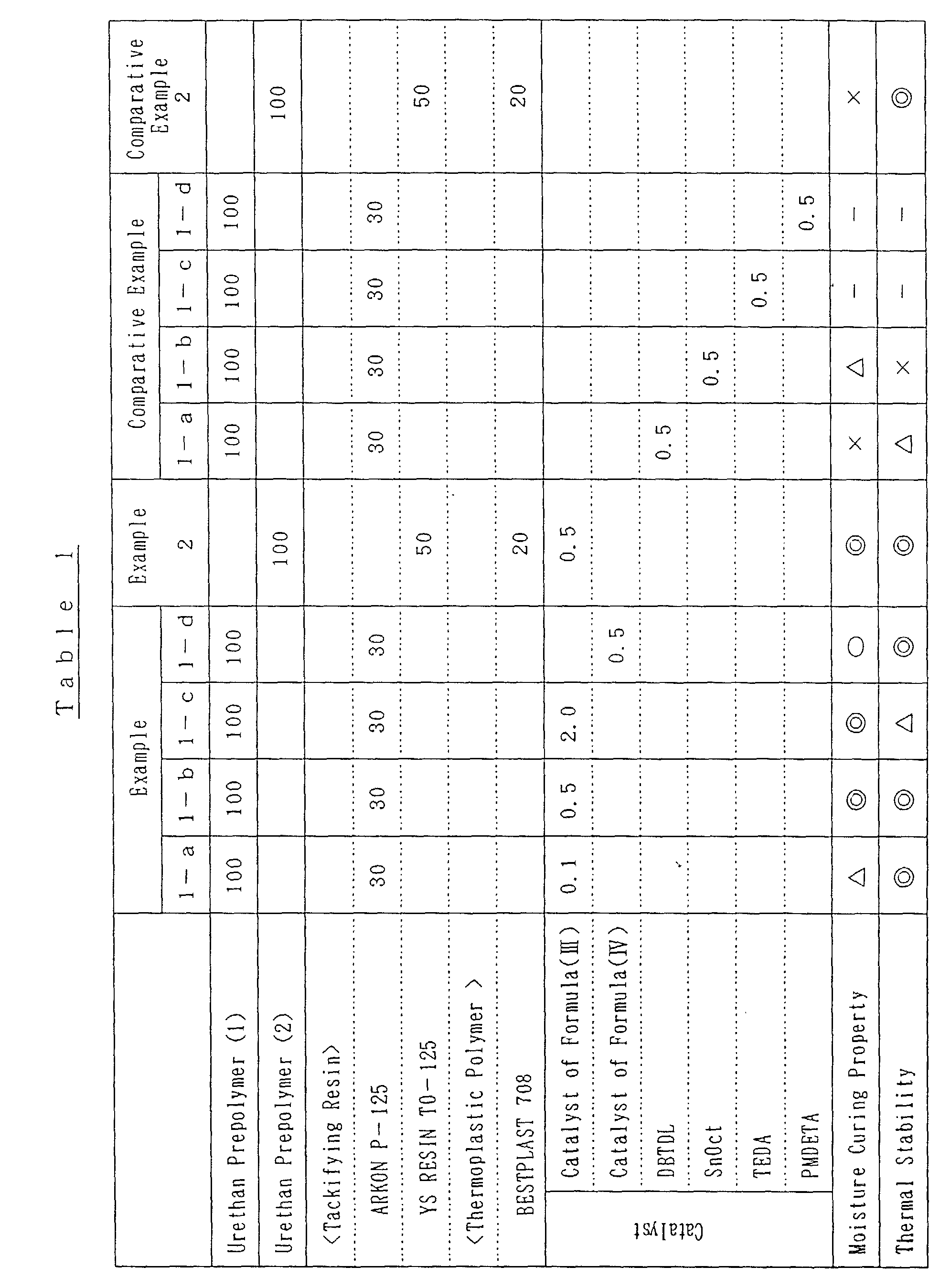

### Evaluation of Examples 1-a to 2 and Comparative Examples 1-a to 2

A plate made of ABS resin having dimensions of 4 cm by 5 cm by 0.3 cm thick is spray-coated with each of the compositions for moisture curing hot melt adhesives in the examples 1-a to 1-d and the example 2 as well as the comparative examples 1-a to 1-d and the comparative example 2 obtained in the above described manner such that the amount of coating is 50 g/m². The above described plate made of ABS resin is then bonded to a pentite steel plate having a shape and dimensions shown in Fig. 1. A bond sample is cured in an atmosphere of a temperature of 20°C and 65 percent relative humidity, the bond surface is kept horizontal with the pentite steel plate on the bottom, a suspension load of 100 g is applied to the pentite steel plate, and heat-resistant creep at a temperature of 80°C under the load of 100 g is measured. A curing time period required until cohesive failure does not occur in the adhesives is considered as an index of moisture curing characteristics.

Furthermore, after putting each of the compositions for moisture curing hot melt adhesives in the examples and the comparative examples in a sealed aluminum cartridge and heating the same at a temperature of 130°C for eight hours, the rate of viscosity increase (%) is measured and the same is used as an index of thermal stability.

The results of the moisture curing property and the thermal stability measured in the above described manner are also shown in the table 1. Respective meanings of signs in the table 1 are as shown in the following table 2.

**Table 2**

| | Moisture Curing Property ( Hour ) | Heat Stability (%) |
|---|---|---|
| ⓞ | less than 4 | less than 10 |
| ○ | 4 to less than 12 | 10 to less than 50 |
| Δ | 12 to less than 24 | 50 to less than 100 |
| × | 24 or more | 100 |

As obvious from the table 1, the compositions for moisture curing hot melt adhesives in the examples 1-a to 1-d and the example 2 exhibit sufficiently superior moisture curing property and thermal stability. On the other hand, the compositions for moisture curing hot melt adhesives in the comparative example 1-a and the comparative example 2 are significantly inferior in moisture curing property, while the composition for moisture curing hot melt adhesives in the comparative example 1-b is significantly inferior in thermal stability. Meanwhile, in each of the compositions for moisture curing type hot melt adhesives in the comparative examples 1-c and 1-d, the catalyst evaporates at the time of mixing adhesives, so that the above described respective evaluations cannot be carried out.

### Example 3

50 parts by weight of saturated alicyclic hydrocarbon resin (ARKON P-125 (trade name) manufactured by Arakawa Chemical Industries, Ltd.) and 30 parts by weight of an α-olefin copolymer (BEST PLAST 708 (trade name) manufactured by Hüles Co., Ltd.) are melt mixed with each other at a temperature of 150°C, and 100 parts by weight of a urethane prepolymer (1) obtained in the example 1 and the catalyst having the structure represented by the formula (III) shown in the example 1 are further added to a mixture obtained and are agitated for thirty minutes while being vacuum deaerated, thereby to obtain a composition for moisture curing hot melt adhesives.

The amount of addition of the catalyst represented by the formula (III) is changed as shown in the following table 3, thereby to obtain three types of compositions for moisture curing hot melt adhesives in examples 3-a, 3-b and 3-c.

### Comparative Example 3

Four types of compositions for moisture curing hot melt adhesives in comparative examples 3-a, 3-b, 3-c and 3-d are obtained as shown in the following table 4 in the same manner as the example 3 except that dibutyltin dilaurate (DBTDL), stannous octoate (SnOct), triethylenediamine (TEDA), pentamethyl diethylenetriamine (PMDETA) are respectively used as catalysts.

### Example 4

60 parts by weight of hydrogenated terpene resin (CLEARON P-115 (trade name) manufactured by Yasuhara Chemical Co., Ltd.) and 60 parts by weight of ethylene-ethyl acrylate resin (EEA-704 (trade name) manufactured by Dupont-Mitsui Polychemicals Co., Ltd.) are melt mixed with each other at a temperature of 150°C, and 100 parts by weight of a urethane prepolymer (1) obtained in the example 1 and 0.5 parts by weight of the catalyst having the structure represented by the foregoing formula (III) are further added to a mixture obtained and are agitated for thirty minutes while being vacuum deaerated, thereby to obtain a composition for moisture curing hot melt adhesives.

### Example 5

50 parts by weight of styrene system hydrocarbon resin (FTR-6100 (trade name) manufactured by Mitsui Petrochemical Industries, Ltd.) and 20 parts by weight of an etyrene-butyl acrylate-carbon monooxide copolymer (EP-4043 (trade name) manufactured by Dupont Co., Ltd.) are melt mixed with each other at a temperature of 150°C, and 100 parts by weight of the urethane prepolymer (1) obtained in the example 1 and 0.4 parts by weight of the catalyst having the structure represented by the formula (IV) shown in the example 1 are further added to a mixture obtained and are agitated for thirty minutes while being vacuum deaerated, thereby to obtain a composition for moisture curing type hot melt adhesives.

### Example 6

100 parts by weight of saturated alicyclic hydrocarbon resin (ARKON P-100 (trade name) manufactured by Arakawa Chemical Industries, Ltd.) and 30 parts by weight of SEBS as the thermoplastic elastomer (CRATON G-1726 (trade name) manufactured by Shell Kagaku K.K.) are thoroughly mixed with each other at a temperature of 140°C using a double arm mixer, and 100 parts by weight of the urethane prepolymer (1) obtained in the example 1 and 0.3 parts by weight of the catalyst having the structure represented by the foregoing formula (IV) are further added to a mixture obtained and are agitated for thirty minutes while being vacuum deaerated, thereby to obtain a composition for moisture curing type hot melt adhesives.

### Example 7

10 parts by weight of disproportionated rosin ester resin (SURER ESTER A-100 (trade name) manufactured by Arakawa Chemical Industries, Ltd.) is hot melted, and 100 parts by weight of the urethane prepolymer (2) obtained in the example 2 and 0.3 parts by weight of the catalyst represented by the foregoing formula (III) are further melt mixed with the melted rosin ester resin and are vacuum deaerated at a temperature of 130°C, to obtain a composition for moisture curing type hot melt adhesives.

### Comparative Example 4

A composition for moisture curing hot melt adhesives is obtained in the same manner as the example 7 except that no catalyst is added.

### Example 8

200 parts by weight of polytetrametylene glycol and 35 parts by weight of diphenylmethane diisocyanate (MDI) are mixed with each other at a temperature of 80°C and are reacted with each other under an atmosphere of nitrogen for four hours, to obtain a urethane prepolymer (3).

80 parts by weight of disproportionated rosin ester resin (SUPER ESTER A-100 (trade name) manufactured by Arakawa Chemical Industries, Ltd.) is hot melted, and 100 parts by weight of the urethane prepolymer (3) and 0.4 parts by weight of the catalyst represented by the foregoing formula (IV) are melt mixed with the rosin ester resin and are vacuum deaerated at a temperature of 130°C, to obtain a composition for moisture curing hot melt adhesives.

### Comparative Example 5

A composition for moisture curing type hot melt adhesives is obtained in the same manner as the example 8 except that the amount of a catalyst is 6.0 parts by weight.

### Evaluation of Examples 3 to 8 and Comparative Examples 3 to 5

The evaluations of moisture curing property and thermal stability are carried out in the same manner as the examples 1 and 2 and the comparative examples 1 and 2 with respect to each of the composition for moisture curing hot melt adhesives in the examples 3 to 8 and the comparative examples 3 to 5 obtained in the above described manner. The results of the evaluations are also shown in the following tables 3 and 4. The respective signs of evaluations in the tables 3 and 4 have the same meanings as the signs of evaluations shown in the above described table 2.

As apparent from the tables 3 and 4, the compositions for moisture curing hot melt adhesives in the examples 3-a to 8 exhibit sufficiently superior moisture curing property and thermal stability. On the other hand, the compositions for moisture curing type hot melt adhesives in the comparative example 3-a and the comparative example 4 are significantly inferior in moisture curing property, while the compositions for moisture curing hot melt adhesives in the comparative example 3-b and the comparative example 5 are significantly inferior in thermal stability. Meanwhile, in the compositions for moisture curing hot melt adhesives in the comparative examples 3-c and 3-d, the catalyst evaporates at the time of mixing adhesives, so that the above described respective evaluations cannot be carried out.

**Table 3**

| | Example | | | | | | | |
|---|---|---|---|---|---|---|---|---|
| | 3-a | 3-b | 3-c | 4 | 5 | 6 | 7 | 8 |
| Urethan Prepolymer | | | | | | | | |
| (1) | 100 | 100 | 100 | 100 | 100 | 100 | | |
| (2) | | | | | | | 100 | |
| (3) | | | | | | | | 100 |

| Tackifying Resin | | | | | | | | |
|---|---|---|---|---|---|---|---|---|
| ARKON P-125 | 50 | 50 | 50 | | | | | |
| CLEARON P-115 | | | | 60 | | | | |
| FTR-6100 | | | | | 50 | | | |
| SUPER ESTER A-100 | | | | | | | 10 | 80 |
| ARKON P-100 | | | | | | 100 | | |

| Thermoplastic Polymer | | | | | | | | |
|---|---|---|---|---|---|---|---|---|
| BESTPLAST 708 | 30 | 30 | 30 | | | | | |
| EEA-704 | | | | 60 | | | | |
| EP-4043 | | | | | 20 | | | |
| CRATON G-1726 | | | | | | 30 | | |

| Catalyst | | | | | | | | |
|---|---|---|---|---|---|---|---|---|
| Catalyst of Formula(III) | 0.1 | 0.5 | 2.0 | 0.5 | | | 0.3 | |
| Catalyst of Formula(IV) | | | | | 0.4 | 0.3 | | 0.4 |
| DBTDL | | | | | | | | |
| SnOct | | | | | | | | |
| TEDA | | | | | | | | |
| PMDETA | | | | | | | | |
| Moisture Curing Property | Δ | ⓞ | ⓞ | ⓞ | ⓞ | ○ | ⓞ | ⓞ |
| Thermal Stability | ⓞ | ⓞ | Δ | ⓞ | ○ | ⓞ | ⓞ | ○ |

**Table 4**

| | Comparative Example | | | | | |
|---|---|---|---|---|---|---|
| | 3-a | 3-b | 3-c | 3-d | 4 | 5 |
| Urethan Prepolymer | | | | | | |
| (1) | 100 | 100 | 100 | 100 | | |
| (2) | | | | | 100 | |
| (3) | | | | | | 100 |

| Tackifying Resin | | | | | | |
|---|---|---|---|---|---|---|
| ARKON P-125 | 50 | 50 | 50 | 50 | | |
| CLEARON P-115 | | | | | | |
| FTR-6100 | | | | | | |
| SUPER ESTER A-100 | | | | | 10 | 10 |
| ARKON P-100 | | | | | | |

| Thermoplastic Polymer | | | | | | |
|---|---|---|---|---|---|---|
| BESTPLAST 708 | 30 | 30 | 30 | 30 | | |
| EEA-704 | | | | | | |
| EP-4043 | | | | | | |
| CRATON G-1726 | | | | | | |

| Catalyst | | | | | | |
|---|---|---|---|---|---|---|
| Catalyst of Formula (III) | | | | | | |
| Catalyst of Formula(IV) | | | | | | 6.0 |
| DBTDL | 0.5 | | | | | |
| SnOct | | 0.5 | | | | |
| TEDA | | | 0.5 | | | |
| PMDETA | | | | 0.5 | | |
| Moisture Curing Property | × | Δ | ― | ― | × | ⓞ |
| Thermal Stability | Δ | × | ― | ― | ⓞ | × |

## Claims

1. The use of a composition containing:
an urethane prepolymer having an isocyanate group in its end, and
a compound having a structure represented by the following formula: 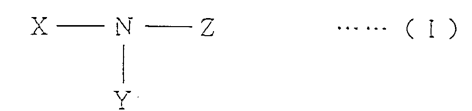 (where X, Y and Z in the formula (I) are alkyl groups or groups represented by the following formula (II), and at least one of X, Y and Z is a group represented by the following formula (II): 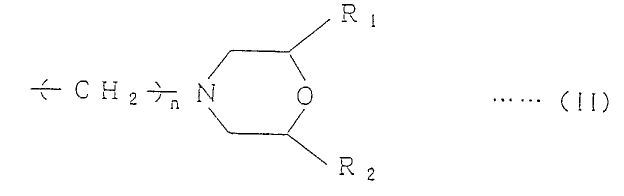 n in the formula (II) is an integer from 1 through 10, and R₁ and R₂ are hydrogen or alkyl groups) in an amount of 0.01 to 5 parts by weight per 100 parts by weight of the urethane prepolymer, for preparing a moisture-curable hot-melt adhesive.

2. The use according to claim 1, **characterized in that** the urethane prepolymer is one having an isocyanate group in its end which is obtained by the addition reaction of a polyol having a hydroxyl group in its molecular end and a polyisocyanate having an isocyanate group in its molecular end.

3. The use according to claim 2, **characterized in that** the polyol having a hydroxyl group in its molecular end is at least one type selected from the group consisting of polyester polyol, polyether polyol, polyalkylene polyol and polycarbonate polyol.

4. The use according to claim 3, **characterized in that** said polyol is a polyalkylene polyol, and the polyalkylene polyol contains a polybutadiene polyol.

5. The use according to claim 4, **characterized in that** said polybutadiene polyol contains a polybutadiene polyol hydride.

6. A moisture-curable hot-melt adhesive, **characterized by** containing:
an urethane prepolymer having an isocyanate group in its end,
a compound having a structure represented by the following formula: 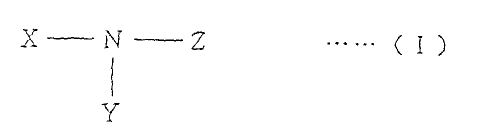 (where X, Y and Z in the formula (I) are alkyl groups or groups represented by the following formula (II), and at least one of X, Y and Z is a group represented by the following formula (II): 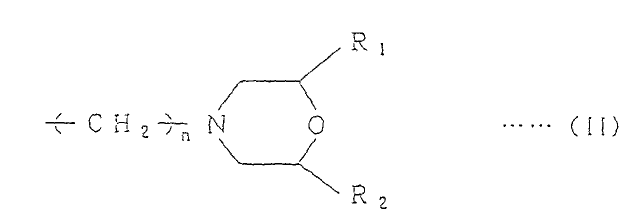 n in the formula (II) is an integer from 1 through 10, and R₁ and R₂ are hydrogen or alkyl groups) in an amount of 0.01 to 5 parts by weight per 100 parts by weight of the urethane prepolymer, and
a tackifying resin in an amount of 5 to 200 parts by weight per 100 parts by weight of the urethane prepolymer.

7. The adhesive according to claim 6, **characterized by** further containing:
a thermoplastic polymer in an amount of 10 to 100 parts by weight per 100 parts by weight of the urethane prepolymer.

8. The adhesive according to claim 6, **characterized in that** said tackifying resin is one or more types selected from a group consisting of rosin type resin, terpene type resin, aliphatic petroleum resin, alicyclic petroleum resin and aromatic petroleum resin.

9. The adhesive according to claim 8, **characterized in that** the ring and ball softening point of said tackifying resin is 80 to 150°C.

10. The adhesive according to claim 7, **characterized in that** said thermoplastic polymer is one or more types ofpolymers selected from the group consisting of an A-(B-A)n block copolymer and an A-B radial block copolymer, where A is a polystyrene block, B is a rubber block, and n is from 1 through 50.

11. The adhesive according to claim 7, **characterized in that** said thermoplastic polymer is a vinyl polymer containing an ethylene-vinyl monomer copolymer whose melt index is approximately 0.1 to 1000 and which contains approximately 10 to 40 percent by weight of a vinyl monomer.

12. The adhesive according to claim 7. **characterized in that** said thermoplastic polymer is an ethylene copolymer containing 20 to 50 % by weight of vinyl monomer, 50 to 75 % by weight of ethylene, and 3 to 20 % by weight of carbon monoxide.

13. The adhesive according to claim 7, **characterized in that** said thermoplastic polymer is a polyolefin polymer.

## Patentansprüche

1. Verwendung einer Zusammensetzung, enthaltend:
ein Urethanprepolymer mit einer Isocyanatgruppe an seinem Ende, und
eine Verbindung mit einer Struktur der folgenden Formel: 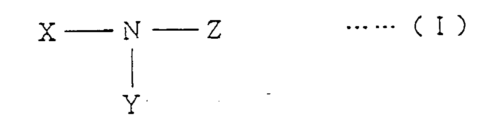 (worin X, Y und Z in der Formel (I) Alkylgruppen oder Gruppen der folgenden Formel (II) sind, und mindestens eines von X, Y und Z eine Gruppe der folgenden Formel (11) ist: 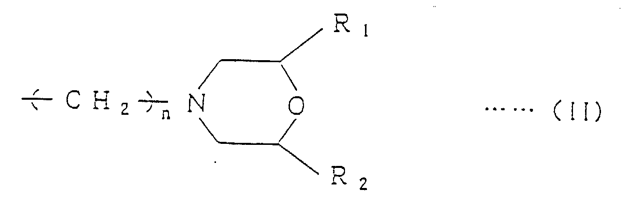 n in der Formel (II) ist eine ganze Zahl von 1 bis 10, und R₁ und R₂ sind Wasserstoff- oder Alkylgruppen) in einer Menge von 0,01 bis 5 Gewichtsteilen pro 100 Gewichtsteilen des Urethanprepolymeren, zur Herstellung eines durch Feuchtigkeit härtbaren Heißschmelzklebers.

2. Verwendung nach Anspruch 1, dadurch gekennzeichnet, daß das Urethanprepolymer ein solches mit einer Isocyanatgruppe an seinem Ende ist, welches erhalten wird durch Additionsreaktion eines Polyols mit einer Hydroxylgruppe an seinem Molekülende und eines Polyisocyanats mit einer Isocyanatgruppe an seinem Molekülende.

3. Verwendung nach Anspruch 2, dadurch gekennzeichnet, daß das Polyol mit einer Hydroxylgruppe an seinem Molekülende mindestens ein Typ ist, gewählt aus der Polyesterpolyol, Polyetherpolyol, Polyalkylenpolyol und Polycarbonatpolyol umfassenden Gruppe.

4. Verwendung nach Anspruch 3, dadurch gekennzeichnet, daß das Polyol ein Polyalkylenpolyol ist und das Polyalkylenpolyol ein Polybutadienpolyol enthält.

5. Verwendung nach Anspruch 4, dadurch gekennzeichnet, daß das Polybutadienpolyol ein Polybutadienpolyolhydrid enthält.

6. Durch Feuchtigkeit härtbarer Heißschmelzkleber, dadurch gekennzeichnet, daß er
ein Urethanprepolymer mit einer Isocyanatgruppe an seinem Ende, eine Verbindung mit einer Struktur der folgenden Formel: 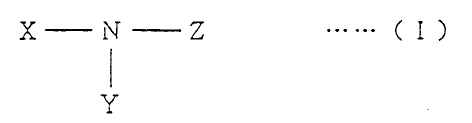 (worin X, Y und Z in der Formel (I) Alkylgruppen oder Gruppen der folgenden Formel (II) sind, und mindestens eines von X, Y und Z eine Gruppe der folgenden Formel (II) ist: 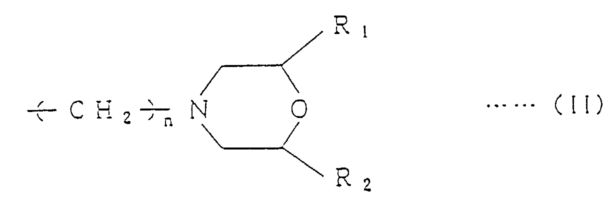 n in der Formel (II) ist eine ganze Zahl von 1 bis 10, und R₁ und R₂ sind Wasserstoff- oder Alkylgruppen) in einer Menge von 0,01 bis 5 Gewichtsteilen pro 100 Gewichtsteilen des Urethanprepolymeren, und
ein klebrigmachendes Harz in einer Menge von 5 bis 200 Gewichtsteilen pro 100 Gewichtsteile des Urethanprepolymeren enthält.

7. Kleber nach Anspruch 6, dadurch gekennzeichnet, daß er weiterhin ein thermoplastisches Polymer in einer Menge von 10 bis 100 Gewichtsteilen pro 100 Gewichtsteile des Urethanprepolymeren enthält.

8. Kleber nach Anspruch 6, dadurch gekennzeichnet, daß das klebrigmachende Harz ein oder mehrere Typen sind, gewählt aus der ein Harz vom Kolophoniumtyp, ein Harz vom Terpentyp, aliphatisches Erdölharz, alicyclisches Erdölharz und aromatisches Erdölharz umfassenden Gruppe.

9. Kleber nach Anspruch 8, dadurch gekennzeichnet, daß der Ring- und Kugel-Erweichungspunkt des klebrigmachenden Harzes 80 bis 150°C beträgt.

10. Kleber nach Anspruch 7, dadurch gekennzeichnet, daß das thermoplastische Polymer ein oder mehrere Typen von Polymeren sind, gewählt aus der ein A-(B-A)n-Blockcopolymer und ein A-B-Radialblockcopolymer umfassenden Gruppe, worin A ein Polystyrolblock ist. B ein Kautschukblock ist und n 1 bis 50 ist.

11. Kleber nach Anspruch 7, dadurch gekennzeichnet, daß das thermoplastische Polymer ein Vinylpolymer ist, das ein Ethylen-Vinylmonomer-Copolymer enthält, dessen Schmelzindex etwa 0,1 bis 1.000 beträgt und das etwa 10 bis 40 Gew.-% eines Vinylmonomeren enthält.

12. Kleber nach Anspruch 7, dadurch gekennzeichnet, daß das thermoplastische Polymer ein Ethylencopolymer ist, enthaltend 20 bis 50 Gew. -% Vinylmonomer, 50 bis 75 Gew.-% Ethylen und 3 bis 20 Gew.-% Kohlenmonoxid.

13. Kleber nach Anspruch 7, dadurch gekennzeichnet, daß das thermoplastische Polymer ein Polyolefinpolymer ist.

## Revendications

1. Utilisation d'une composition contenant:
un prépolymère d'uréthanne comportant un groupe isocyanate dans son extrémité et
un composé ayant une structure représentée par la formule suivante: 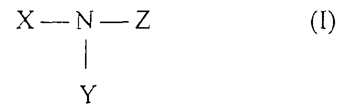 (dans laquelle X, Y et Z, dans la formule (I), sont des groupes alkyle ou des groupes représentés par la formule (II) suivante, et au moins un des radicaux X, Y et Z est un groupe représenté par la formule (II) suivante: 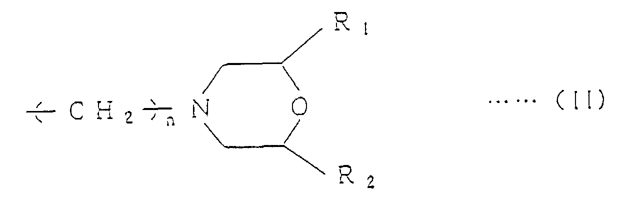 n, dans la formule (II), est un nombre entier de 1 à 10, et R₁ et R₂ sont des atomes d'hydrogène ou des groupes alkyle) en quantité de 0,01 à 5 parties en poids pour 100 parties en poids du prépolymère d'uréthanne, pour préparer un adhésif thermofusible durcissable à l'humidité.

2. Utilisation selon la revendication 1, caractérisée en ce que le prépolymère d'uréthanne est un composé comportant un groupe isocyanate dans son extrémité, que l'on obtient par la réaction d'addition d'un polyol comportant un groupe hydroxyle dans son extrémité moléculaire et d'un polyisocyanate comportant un groupe isocyanate dans son extrémité moléculaire.

3. Utilisation selon la revendication 2, caractérisée en ce que le polyol comportant un groupe hydroxyle dans son extrémité moléculaire est au moins un type choisi dans le groupe constitué par un polyesterpolyol, un polyétherpolyol, un polyalkylénepolyol et un polycarbonatepolyol.

4. Utilisation selon la revendication 3, caractérisée en ce que ledit polyol est un polyalkylénepolyol et le polyalkylènepolyol contient un polybutadiènepolyol.

5. Utilisation selon la revendication 4, caractérisée en ce que ledit polybutadiènepolyol contient un hydrure de polybutadiènepolyol.

6. Adhésif thermofusible durcissable à l'humidité, caractérisé en ce qu'il contient:
un prépolymère d'uréthanne comportant un groupe isocyanate dans son extrémité,
un composé ayant une structure représentée par la formule suivante: 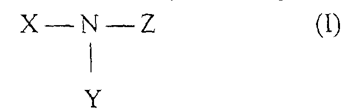 (dans laquelle X, Y et Z, dans la formule (I), sont des groupes alkyle ou des groupes représentés par la formule (Il) suivante, et au moins un des radicaux X, Y et Z est un groupe représenté par la formule (II) suivante: 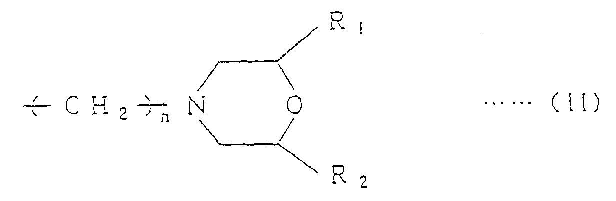 n, dans la formule (II), est un nombre entier de 1 à 10, et R₁ et R₂ sont des atomes d'hydrogène ou des groupes alkyle) en quantité de 0,01 à 5 parties en poids pour 100 parties en poids du prépolymère d'uréthanne, et
une résine d'adhésivité en quantité de 5 à 200 parties en poids pour 100 parties en poids du prépolymère d'uréthanne.

7. Adhésif selon la revendication 6, caractérisé en ce qu'il contient, en outre:
un polymère thermoplastique en quantité de 10 à 100 parties en poids pour 100 parties en poids du prépolymère d'uréthanne.

8. Adhésif selon la revendication 6, caractérisé en ce que ladite résine d'adhésivité est d'un ou plusieurs types choisis dans le groupe constitué par une résine de type colophane, une résine de type terpène, une résine de pétrole aliphatique, une résine de pétrole alicyclique et une résine de pétrole aromatique.

9. Adhésif selon la revendication 8, caractérisé en ce que le point de ramollissement déterminé par la méthode bille et anneau de ladite résine d'adhésivité est de 80 à 150°C.

10. Adhésif selon la revendication 7, caractérisé en ce que ledit polymère thermoplastique est d'un ou plusieurs types de polymères choisis dans le groupe constitué par un copolymère séquencé A-(B-A)ₙ et un copolymère séquencé radial A-B, où A est un bloc de polystyrène, B est un bloc de caoutchouc et n a une valeur de 1 à 50.

11. Adhésif selon la revendication 7, caractérisé en ce que ledit polymère thermoplastique est un polymère vinylique contenant un copolymère éthylène/monomère vinylique dont l'indice de fluidité à chaud est d'environ 0,1 à 1 000 et qui contient environ 10 à 40 pour cent en poids d'un monomère vinylique.

12. Adhésif selon la revendication 7, caractérisé en ce que ledit polymère thermoplastique est un copolymère d'éthylène contenant 20 à 50% en poids de monomère vinylique, 50 à 75% en poids d'éthylène et 3 à 20% en poids de monoxyde de carbone.

13. Adhésif selon la revendication 7, caractérisé en ce que ledit polymère thermoplastique est un polymère de type polyoléfine.
